# EUROPEAN PATENT APPLICATION

(11) **EP 2 146 311 A2**
(43) Date of publication of application: **20.01.2010**
(21) Application number: 09155365.1
(22) Date of filing: 17.03.2009
(51) Int. Cl.: G06Q 30/00

(54) **Recording medium distribution system and recording medium distribution method**

(30) Priority: 15.07.2008 JP 2008184347
(71) Applicant: Kabushiki Kaisha Yoshida Store, Aizuwakamatsu-shi Fukushima 965-0865 (JP)
(72) Inventor: Yoshida, Junichi, Aizuwakamatsu-shi Fukushima 965-0865 (JP)
(74) Representative: Vossius & Partner

(57) **Abstract**

Provided is a recording medium distribution system and a recording medium distribution method capable of simply offering information adequate to a user widely. A recording medium distribution system (1) is connected to a computer network (2) being connected by a plurality of user terminals and advertiser terminals. The recording medium distribution system (1) searches an application of a distribution order and an application of a publication request for a match between a use condition of the user and an advertisement condition of the advertiser, and accepts the distribution order and the publication request if the match is present by means of a reception element (30).

## Description

### BACKGROUND OF THE INVENTION

### Field of the Invention

The present invention relates to a recording medium distribution system and a recording medium distribution method for distributing a recording medium by means of a computer network to a user who has a desire for the recording medium.

### Description of the Related Art

In recent years, the provision of information has been carried out by distributing free paper in the street, in front of a shop or the like. Since free paper can be easily handed to a person, it is possible to distribute the information widely; however, a user may not only get a useful piece of information but also an unnecessary one in this way. To an enterprise who has published the information on the free paper, the information is offered not only to a desired user, but also to a user who does not need the information, leading to a bad efficiency in distributing the information.

Accordingly, there has been disclosed an image forming management system which selectively records information related to personal information of a user on a back surface of a recording medium when an image is recorded on a front surface of the recording medium by an image forming device (for example, refer to Japanese Patent Laid-open No. 2007-266884, hereinafter referred to as Patent Document 1). According thereto, since the information is selectively recorded according to the personal information of the user, it is possible to provide the information with a good efficiency.

However, according to the system described in Patent Document 1, since the information is selectively recorded in relation to the personal information of the user when printing the image on the recording medium, a special image forming device is necessary; therefore, it is difficult to be widely used by a general person. Accordingly, it is difficult to provide necessary information to an adequate person widely.

### SUMMARY OF THE INVENTION

The present invention has been accomplished in view of the aforementioned problems, and it is therefore an object of the present invention to provide a recording medium distribution system and a recording medium distribution method capable of simply and widely offering information adequate to a user.

In the present invention, the recording medium distribution system configured to distribute a recording medium by means of a computer network to a user who has a desire for the recording medium, includes: a distribution ordering element configured to accept an application of a distribution order from the user who has a desire for the recording medium; a publication requesting element configured to accept an application of a publication request from an advertiser who has a desire to publish information on a back surface of the recording medium; and a reception element configured to search the application of the distribution order accepted by the distribution ordering element and the application of the publication request accepted by the publication requesting element for a match between a use condition of the user and an advertisement condition of the advertiser, and accept the distribution order and the publication request if the match is present.

In the present invention, the recording medium distribution method for distributing a recording medium by means of a computer network to a user who has a desire for the recording medium, includes steps of: accepting an application of a distribution order from the user who has a desire for the recording medium by means of a computer; accepting an application of a publication request from an advertiser who has a desire to publish information on a back surface of the recording medium by means of a computer; and searching the application of the distribution order accepted by the distribution ordering element and the application of the publication request accepted by the publication requesting element for a match between a use condition of the user and an advertisement condition of the advertiser, and accepting the distribution order and the publication request if the match is present by means of a computer.

According to the recording medium distribution system and the recording medium distribution method of the present invention, with regard to the application of the distribution order and the application of the publication request, the match between the use condition of the user and the advertisement condition of the advertiser is searched and the distribution order and the publication request are accepted only when the match is found. Therefore, a user can easily get a piece of highly useful information simply by making the distribution order of the recording medium. The advertiser can also offer the information adequate to the user widely in a simple way.

Particularly, by searching a match between a use area of the user and at least one of an advertisement area of the advertiser and a business type or state of the user by means of the reception element , useful information can be proficiently provided to a user related closely to the use area, or the business type or state.

The application of the distribution order is searched for a match between the use condition of the user and the advertisement condition of the advertiser by referring to the application table of publication request. The distribution order will be accepted if the match is present; otherwise, the distribution order will be stored in the application table of distribution order. Moreover, the application of a publication request is searched for a match between the use condition of the user and the advertisement condition of the advertiser by referring to the application table of distribution order. The publication request will be accepted if the match is present, and otherwise, the publication request will be stored in the application table of publication request. According thereto, a match can be easily found, allowing the distribution order and the publication request to be accepted quickly.

By displaying a context of the application of the distribution order for the recording medium according to a request from the advertiser, the advertiser can perform the provision of information on purpose more easily.

Additionally, by charging the advertiser for an advertisement fee after the publication request has been accepted, the advertiser can provide the information to the user proficiently. As a result, the user can get the information more easily, which promotes the provision of information by the advertiser.

### BRIEF DESCRIPTION OF THE DRAWINGS

Fig. 1 is a block diagram illustrating a recording medium distribution system connected to a computer network according to an embodiment of the present invention.
Fig. 2 is a block diagram schematically illustrating the recording medium distribution system according to an embodiment of the present invention.
Fig. 3 is a block diagram illustrating a user registration window displayed by a user registration element illustrated in Fig. 2.
Fig. 4 is a block diagram illustrating an advertiser registration window displayed by an advertiser registration element illustrated in Fig. 2.
Fig. 5 is a block diagram illustrating an advertisement condition entering window displayed by an advertisement condition entering element illustrated in Fig. 2.
Fig. 6 is a flow chart illustrating a process of a recording medium distribution method according to the recording medium distribution system illustrated in Fig. 2.
Fig. 7 is a flow chart illustrating a distribution order process in the recording medium distribution method illustrated in Fig. 6.
Fig. 8 is a flow chart illustrating a user registration process illustrated in Fig. 7.
Fig. 9 is a flow chart illustrating a user login process illustrated in Fig. 7.
Fig. 10 is a flow chart illustrating a publication request process in the recording medium distribution method illustrated in Fig. 6.
Fig. 11 is a flow chart illustrating an advertiser registration process illustrated in Fig. 10.
Fig. 12 is a flow chart illustrating an advertiser login process illustrated in Fig. 10.
Fig. 13 is a flow chart illustrating an advertisement condition entering process illustrated in Fig. 10.
Fig. 14 is a flow chart illustrating a reception process in the recording medium distribution method illustrated in Fig. 6.
Fig. 15 is a flow chart illustrating a distribution order reception process illustrated in Fig. 14.
Fig. 16 is a flow chart illustrating a publication request reception process illustrated in Fig. 14.

### DETAILED DESCRIPTION OF THE PREFERRED EMBODIMENTS

Hereinafter, an embodiment of the present invention will be described in detail with reference to the drawings.

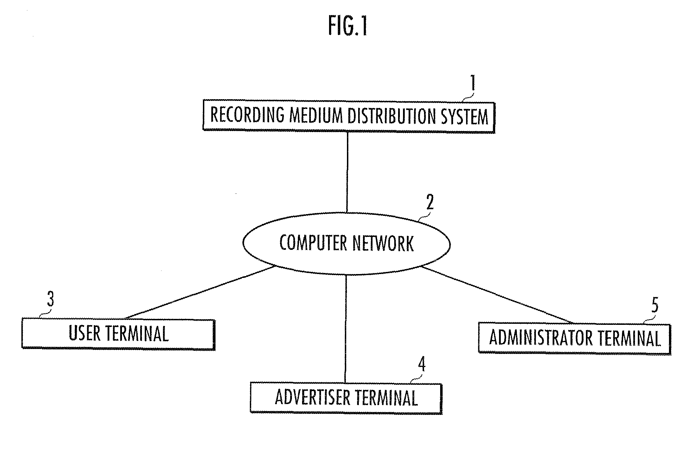

Fig. 1 is a block diagram illustrating a recording medium distribution system 1 connected to a computer network 2 according to an embodiment of the present invention. The recording medium distribution system 1 has functions of a server and is used to distribute a recording medium, such as paper or the like, to a user who has a desire for the distribution of the recording medium. The computer network 2 is connected by the recording medium distribution system 1, a plurality of user terminals 3 and a plurality of advertiser terminals 4. It may also be connected by an administrator terminal 5 if necessary.

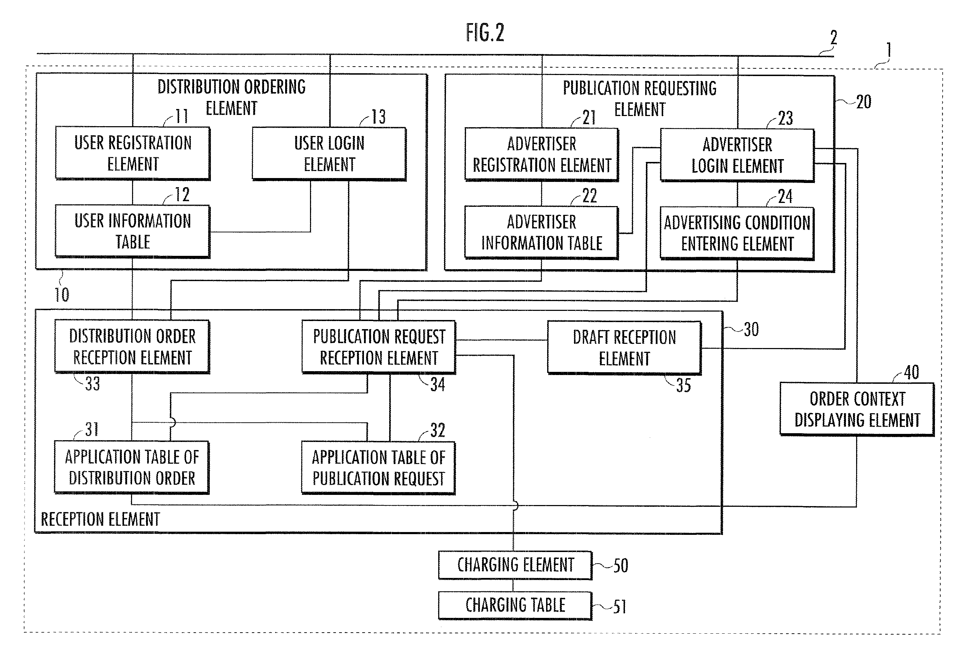

Fig. 2 is a block diagram schematically illustrating the recording medium distribution system 1. The recording medium distribution system 1 has a hardware configuration like a general computer capable of executing a program according to an external request, and includes, for example, a distribution ordering element 10, a publication requesting element 20, a reception element 30, an order context displaying element 40 and a charging element 50.

The distribution ordering element 10 accepts an application of a distribution order for the recording medium from a user who has a desire for the recording medium, and is provided with a user registration element 11 configured to accept user registration, a user information table 12 configured to store user information, and a user login element 13 configured to accept user login

The user registration elements 11, for example, records the user information in the user information table 12. In detail, the user registration element 11 has the functions, for example, as to display a user registration window asking for the entry of user information on the user terminal 3 according to a request sent from the user terminal 3, record the user information sent from the user terminal 3 in the user information table 12, and record a member ID and password issued in the user information table 12 while displaying the member ID and the password on the user terminal 3.

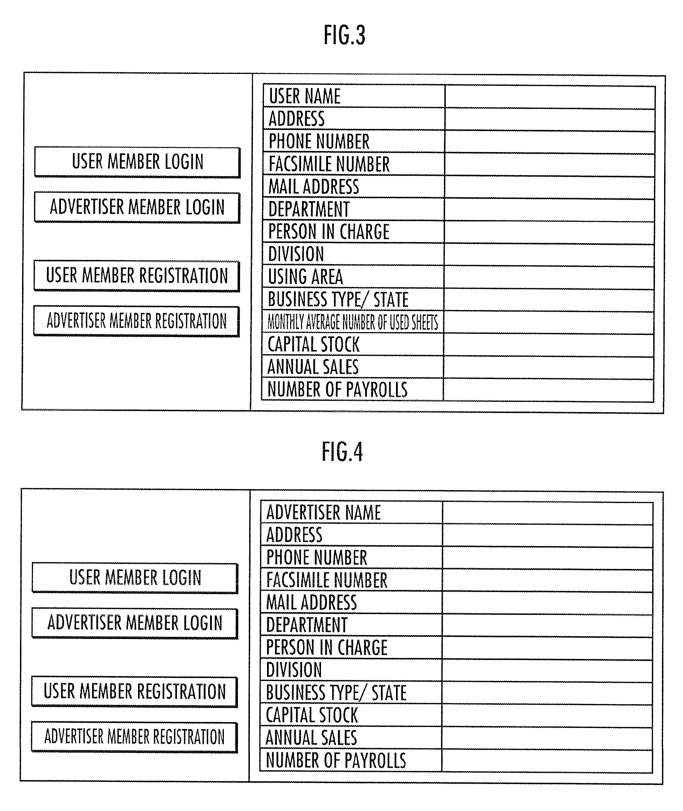

As illustrated in Fig. 3, the user registration window, for example, includes entry fields for entering user name, address, contact address, user's division, use area where a recording medium is used, business type or state, monthly average number of used sheets of a recording medium, capital stock, annual sales, number of payrolls and so forth. As the contact address, for example, phone number, facsimile number, mail address, department, person in charge and the like may be mentioned. The user's division refers to a corporate organization, a public institution, a personal business, an individual or the like. The user's division is preferred to be entered by selecting from a set of predefined divisions. The use area refers to an area where a user uses a recording medium and is preferred to be entered by selecting from a set of predefined areas. It is also preferred that the business type or state is entered by selecting from a set of predefined business types or state. This is due to the reason that a random entry will make classification become complicated. Among the user information, the use area and the business type or state, for example, are items used by the reception element 30 as a use condition of the user, therefore, they are preferred to be set as required entries and the registration will not be accepted unless both are entered. Moreover, the user name and the address are preferred to be set as the required entries.

The user information table 12 includes items such as user name, address, contact address, division, use area, business type or state, monthly average number of used sheets, capital stock, annual sales, number of payrolls, member ID, password and so forth.

The user login element 13, for example, accepts a login of a user as the application of the distribution order of the recording medium. In detail, the user login element 13 has functions, for example, as to display a login window asking for the entry of a member ID and password on the user terminal 3 according to a request sent from the user terminal 3, check the member ID and password sent from the user terminal 3 by referring to the user information table 12, and authorize the login for the application of the distribution order when the member ID and password are matched with those in the user information table 12.

The publication requesting element 20 accepts an application of a publication request from an advertiser who has a desire to publish information on a back surface of the recording medium, and is provided with an advertiser registration element 21 configured to accept advertiser registration, an advertiser information table 22 configured to store advertiser information, and an advertiser login element 23 configured to accept advertiser login, and an advertisement condition entering element 24 configured to enter an advertisement condition.

The advertiser registration element 21, for example, records the advertiser information in the advertiser information table 22. In detail, the advertiser registration element 21 has the functions, for example, as to display an advertiser registration window asking for the entry of the advertiser information on the advertiser terminal 4 according to a request sent from the advertiser terminal 4, record the advertiser information sent from the advertiser terminal 4 in the advertiser information table 22, and record a member ID and password issued in the advertiser information table 22 and display the member ID and the password on the advertiser terminal 4.

As illustrated in Fig. 4, the advertiser registration window, for example, includes entry fields for entering advertiser name, address, contact address, advertiser's division, business type or state, capital stock, number of payrolls and so forth. As the contact address, for example, phone number, facsimile number, mail address, department, person in charge and the like may be mentioned. The advertiser's division refers to a corporate organization, a public institution, a personal business, an individual or the like. The advertiser's division is preferred to be entered by selecting from a set of predefined divisions. It is also preferred that the business type or state is entered by selecting from a set of predefined business types or state. Among the advertiser information, the advertiser name, the address and the contact address are preferred to be set as required entries, and the registration will not be accepted unless all those items are entered.

The advertiser information table 22 includes items such as advertiser name, address, contact address, division, business type or state, capital stock, annual sales, number of payrolls, member ID, password and so forth.

The advertiser login element 23 has functions, for example, as to display a login window asking for the entry of a member ID and password on the advertiser terminal 4 according to a request sent from the advertiser terminal 4, check the member ID and password sent from the advertiser terminal 4 by referring to the advertiser information table 22, and authorize the login for the application of the publication request when the member ID and password are matched with those in the advertiser information table 22.

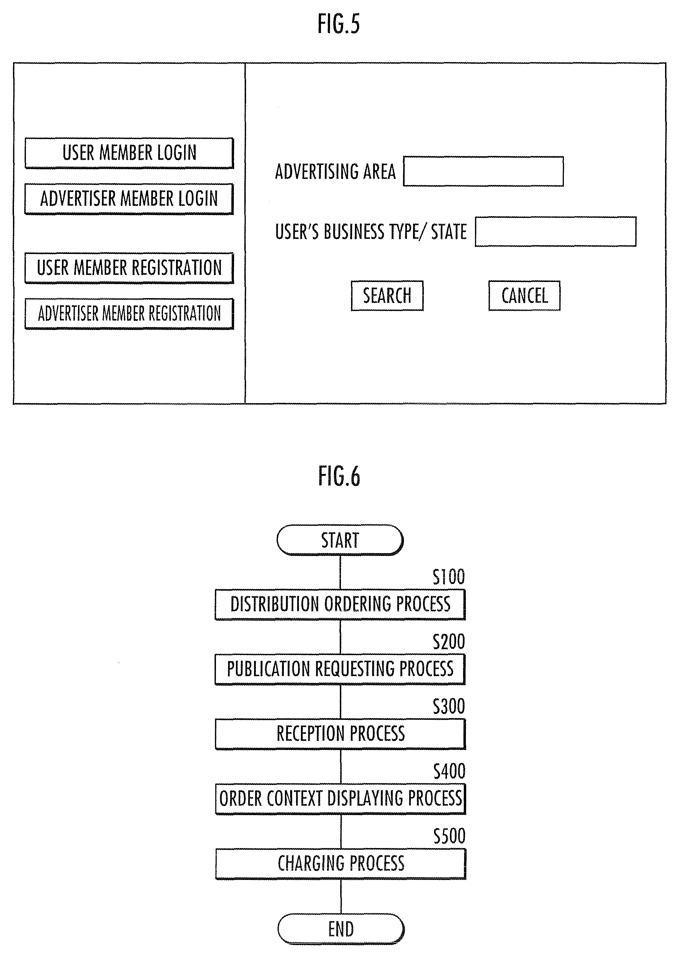

The advertisement condition entering element 24 has functions, for example, as to display on the advertiser terminal 4 which was authorized the login an advertisement condition window asking for the entry of the advertisement condition to be used in the reception element 30, and accepts the advertisement condition sent from the advertiser terminal 4 as the application of the publication request. As illustrated in Fig. 5, the advertisement condition window, for example, includes entry fields for entering an advertisement area where the recording medium will be distributed, a business type or state of a user and so forth. The advertisement area is an area where the recording medium published with information will be distributed and is preferred to be entered by selecting from a set of predefined areas. The business type or state of the user refers to the business type or state of a user to whom the recording medium published with information will be distributed. It is also preferred that the business type or state of the user is entered by selecting from a set of predefined business types or state. This is due to the reason that a random entry will make classification become complicated. Among the advertisement conditions, the advertisement area and the business type or state of the user are preferred to be set as required entries, and the application of the publication request will not be accepted unless both are entered.

The reception element 30 searches the application of the distribution order accepted by the distribution ordering element 10 and the application of the publication request accepted by the publication requesting element 20 for a match between the use condition of the user and the advertisement condition of the advertiser, and accepts the distribution order and the publication request if the match is found. The reception element 30 includes, for example, an application table of distribution order 31 for storing the application of the distribution order, an application table of publication request 32 for storing the application of the publication request, a distribution order reception element 33 configured to search the publication request accepted by the publication requesting element 20 for a matched item for the application of the distribution order accepted by the distribution ordering element 10, and a publication request reception element 34 configured to search the application of the distribution order accepted by the distribution ordering element 10 for a matched item for the publication request accepted by the publication requesting element 20.

The application table of distribution order 31 includes items, such as user name, use area, business type or state of user, application date, category of desired recording medium and number of desired recording medium.

The application table of publication request 32 includes items, such as advertiser name, advertisement area, business type or state of user to whom the recording medium will be distributed, application date, category of recording medium to be advertised and number of the recording medium.

The distribution order reception element 33 has functions, for example, as to retrieve the use condition of a user whose login is authorized by the user login element 13 by referring to the user information table 12 and search a match item between the use condition of the user and the advertisement condition of the advertiser by referring to the application table of publication request 32; display on the user terminal 3 a message notifying that the distribution order will be accepted when the match item has been found and ask for the entry of the category and the number of the recording medium desired to be distributed so as to accept the distribution order; and otherwise, display on the user terminal 3 a message notifying that there is no matched advertiser at present and a contact will be made when there is a matched application of a publication request and ask for the entry of the type and number of the recording medium so as to store the application of the distribution order in the application table of distribution order 31. As the entries to be stored in the application table of distribution order 31, the user name, the use area, the business type or state of the user, the application date, the category of the desired recording medium and the number of the desired recording medium may be given.

The publication request reception elements 34 has functions, for example, as to search a matched item between the use condition of the user and the advertisement condition of the advertiser for the application of the publication request having the advertisement condition accepted by the advertisement condition entering element 24 by referring to the application table of distribution order 31; display on the advertiser terminal 4 a message notifying that the publication request will be accepted when the matched item has been found and ask for the entry of the category and the number of the desired recording medium for distributing so as to accept the distribution order; and otherwise, display on the advertiser terminal 4 a message notifying that there is no matched advertiser at present and a contact will be made when there is a matched application of a distribution order and ask for the entry of the type and number of the recording medium so as to store the application of the publication request in the application table of publication request 32. As the entries to be stored in the application table of publication request 32, for example, the advertiser name, the advertisement area, the business type or state of the user to whom the recording medium will be distributed, the application date, the category and the number of the recording medium to be distributed may be given.

It is preferable to configure the distribution order reception element 33 and the publication request reception element 34 as to search a matched condition between the use area of the user and at least one of the advertisement area of the advertiser and the business type or state of the user by using at least one of the use area and the business type or state of the user as the use condition of the user and at least one of the advertisement area of the advertiser and the business type or state of the user as the advertisement condition. Thereby, beneficial information can be provided efficiently in close connection to the area or the business type or state.

It is acceptable to provide the reception element 30 with a draft reception element 35 configured to accept a draft of the information to be published on the recording medium when a match is found by the publication request reception element 34. It is preferable to configure the draft reception element 35 functions to accept drafts according to different cases, such as using a registered draft, requesting preparation of a draft, using simple preparation function to prepare a draft with reference to a sample, and so forth.

The order context displaying element 40 is configured to display a state of the application of the distribution order for the recording medium. Specifically, the order context displaying element 40 has the function to display the application context of the distribution order on the advertiser terminal 4 by referring to the application table of distribution order 31 according to a request from the advertiser terminal 4 cent by an advertiser whose login is authorized. Therefore, the advertiser can easily provide information on purpose. As the context displayed, the use condition, such as the use area and the business type or state of the user who is applying the distribution order, the category and the number of the recording medium, and so forth, may be given.

The charging element 50 is configured to charge the advertiser for an advertisement fee if the distribution order and the publication request have been accepted by the reception element 30. Specifically, the charging element 50 is provided with functions, such as to charge the advertiser for the advertisement fee according to, for example, the number of the recording medium if the publication request has been accepted by the publication request reception element 34 and record the advertisement fee in a billing table 51. The billing table 51 can be viewed from, for example, the administrator terminal 5.

Fig. 6 is a flow chart illustrating a whole process of a recording medium distribution method according to the recording medium distribution system 1. The recording medium distribution method includes, for example, a distribution ordering process carried out by the distribution ordering element 10 (step S100), a publication requesting process carried out by the publication requesting element 20 (step 5200) and a reception process carried out by the reception element 30 (step S300). It is acceptable to include an order context displaying process carried out by the order context displaying element 40 (step S400) and a charging process carried out by the charging element 50 (step S500) in the recording medium distribution method if necessary.

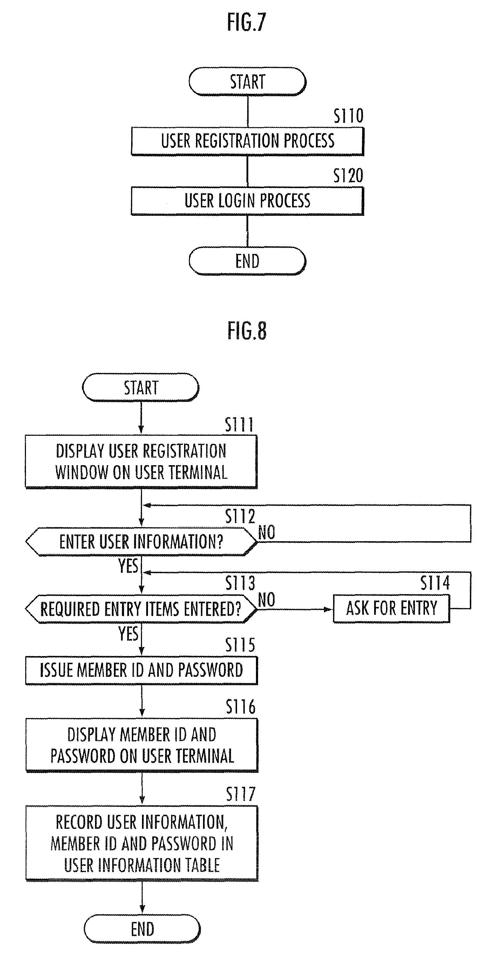

Fig. 7 is a flow chart illustrating the distribution order process (step S100) which includes a user registration process (step S110) and a user login process (step S120). The user registration process (step S110) is carried out by the user registration element 11 when a user uses the system for the first time. The user login process (step S120) is carried by the user login element 13 when a registered user places the distribution order.

Fig. 8 is a flow chart illustrating in detail the user registration process (step S110). In the user registration process (step S110), firstly, the user registration window, for example as illustrated in Fig. 3, is displayed on the user terminal 3 according to a request sent from the user terminal 3 (step S111). Subsequently, after the user information has been entered from the user terminal 3 (step S112: Y), whether the required entries have been entered, for example, is confirmed (step S113). As the required entries, for example, the user name, the address and the use condition may be given. Among the use condition, at least one of the use area and the business type or state is set as the required entry.

If the required entries are not entered (step S113: N), the user registration will not be accepted and the entry of the required entries is demanded (step S114). When the required entries have been entered (step S113: Y), the member ID and password are issued (step S115) and displayed on the user terminal 3 (step S116). Thereafter, the issued member ID and the password, together with the user information sent from the user terminal 3, are stored in the user information table 12 (step S117).

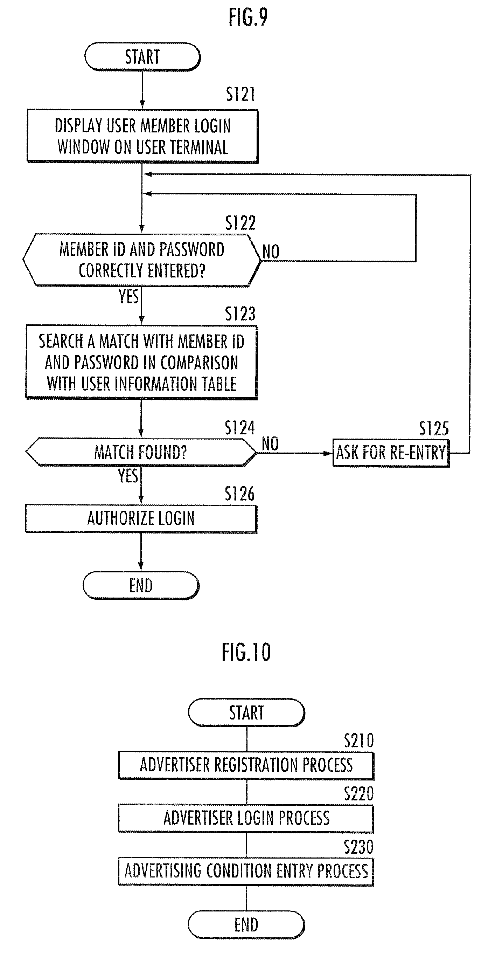

Fig. 9 is a flow chart illustrating in detail the user login process (step S120). In the user login process (step S120), firstly, the user login window is displayed on the user terminal 3 according a request sent from the user terminal 3, asking for the entry of the member ID and the password (step S121). After the member ID and the password are entered from the user terminal 3 (step S122: Y), a match to the entered member ID and password is searched by referring to the user information table 12 (step S123). If the match is not found (step S124: N), the user is asked to re-enter the member ID and the password (step S125). When the match is found (step S124: Y), the login is authorized (step S126), and the flow chart proceeds to the reception process (step S300).

Fig. 10 is a flow chart illustrating in detail the publication request process (step S200) which includes an advertiser registration process (step S210), an advertiser login process (step S220) and an advertisement condition entering process (step S230). The advertiser registration process (step S210) is carried out by the advertiser registration element 21 when an advertiser places a publication request for the first time. The advertiser login process (step S220) is carried out by the advertiser login element 23 when a registered advertiser applies for a publication request. The advertisement condition entering process (step S230) is carried out by the advertisement condition entering element 24 after an advertiser has logged in.

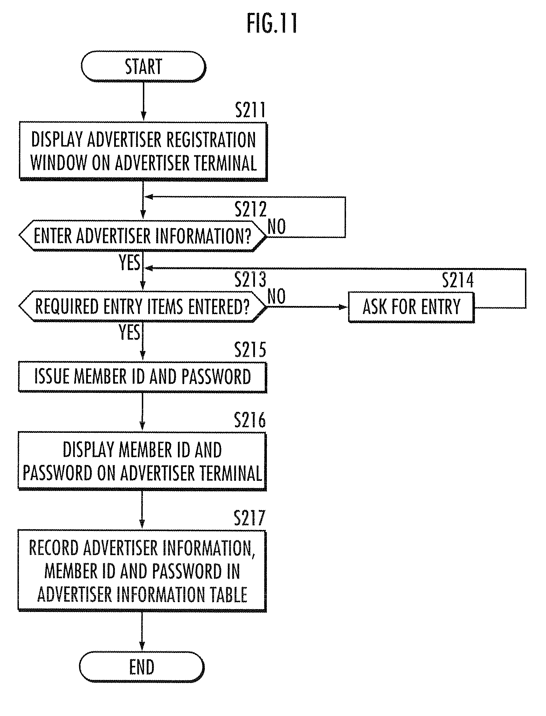

Fig. 11 is a flow chart illustrating in detail the advertiser registration process (step S210). In the advertiser registration process (step S210), firstly, an advertiser registration window, for example as illustrated in Fig. 4, is displayed on the advertiser terminal 4 according to a request sent from the advertiser terminal 4 (step S211). Subsequently, after the advertiser information has been entered from the advertiser terminal 4 (step S212: Y), whether the required entries have been entered, for example, is confirmed (step S213). For example, the user name, the address and the contact address may be given as the required entries.

If the required entries are not entered (step S213: N), the advertiser registration will not be accepted and the entry of the required entries is demanded (step S214). When the required entries have been entered (step S213: Y), the member ID and password are issued (step S215) and displayed on the advertiser terminal 4 (step S216). Thereafter, the issued member ID and the password are stored in the advertiser information table 22, together with the advertiser information sent from the advertiser terminal 4 (step S217).

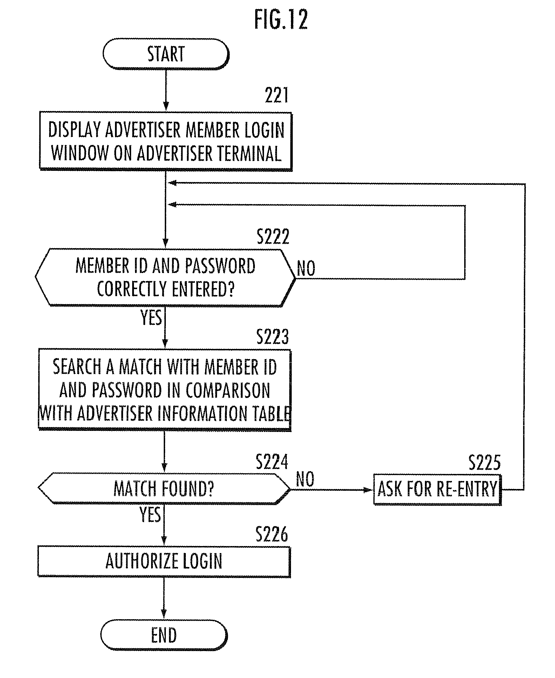

Fig. 12 is a flow chart illustrating in detail the advertiser login process (step S220). In the advertiser login process (step S220), firstly, the advertiser login window is displayed on the advertiser terminal 4 according a request sent from the advertiser terminal 4, asking for the entry of the member ID and the password (step S221). After the member ID and the password are entered from the advertiser terminal 4 (step S222: Y), a match to the entered member ID and password is searched by referring to the advertiser information table 22 (step S223). If the match is not found (step S224: N), the advertiser is asked to re-enter the member ID and the password (step S225). When the match is found (step S224: Y), the login is authorized (step S226), and the flow chart proceeds to the advertisement condition entering process (step S230).

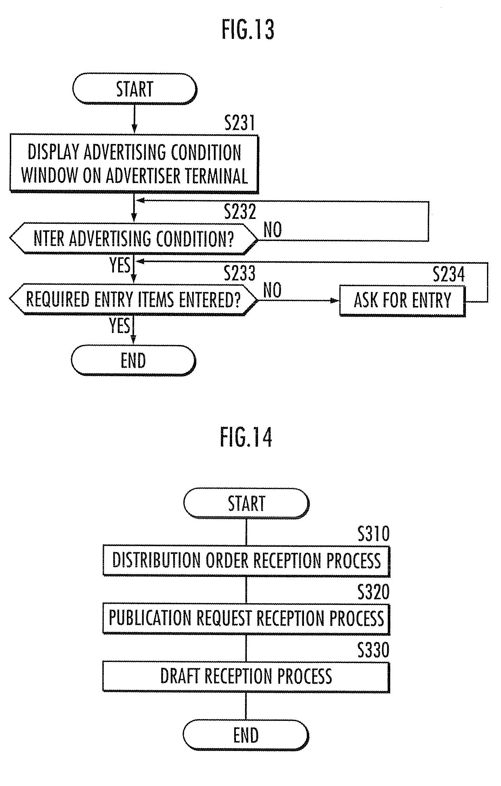

Fig. 13 is a flow chart illustrating in detail the advertisement condition entering process (step S230). In the advertisement condition entering process (step S230), firstly, an advertisement condition window, for example as illustrated in Fig. 5, is displayed on the advertiser terminal 4 (step S231) according a request sent from the advertiser terminal 4 by the advertiser whose login has been authorized in the advertiser login process (step S220). Subsequently, after the member ID and the password are entered from the advertiser terminal 4 (step S232: Y), whether the required entries have been entered, for example, is confirmed (step S233). For example, at least one of the advertisement area and the business type or state may be set as the required entries. If the required entries are not entered (step S233: N), the entry of the required entries is demanded (step S234). When the required entries have been entered (step S233: Y), the flow chart proceeds to the reception process (step S300).

Fig. 14 is a flow chart illustrating in detail the reception process (step S300) which includes a distribution order reception process (step S310), a publication request reception process (step S320), and a draft reception process (step S330) if necessary. The distribution order reception process (step S310) is carried by the distribution order reception element 33. The publication request reception process (step S320) is carried by the publication request reception element 34. The draft reception process (step S330) is carried by the draft reception element 35.

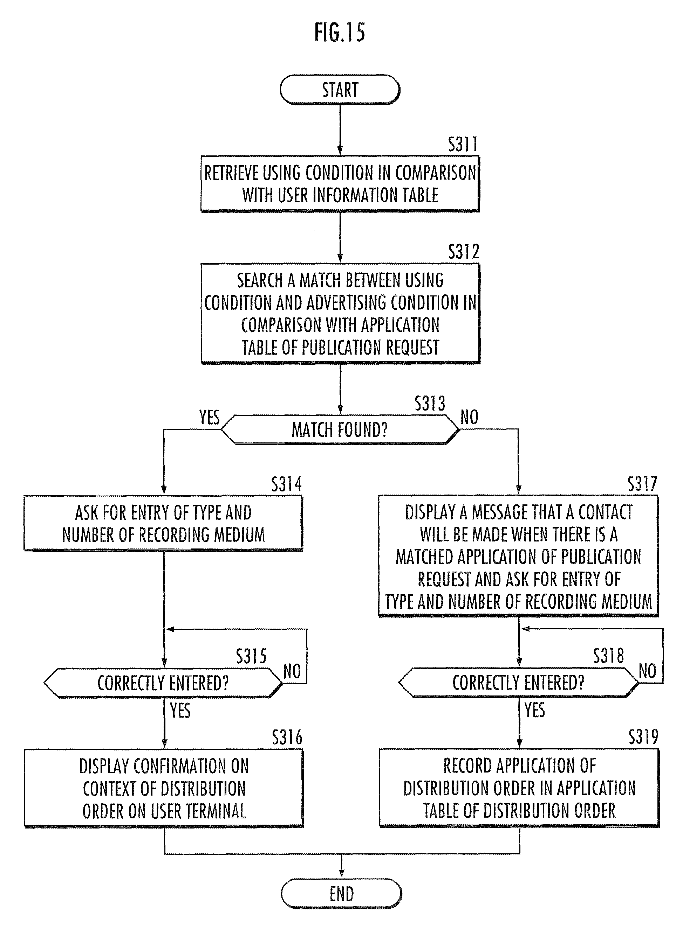

Fig. 15 is a flow chart illustrating in detail the distribution order reception process (step S310). In the distribution order reception process (step S310), firstly, the use condition of the user whose login has been authorized in the user login process (step S120) is retrieved by referring to the user information table 12 (step S311). Subsequently, a match between the use condition of the user and the advertisement condition of the advertiser is searched by referring to the application table of publication order 32 (step S312). The match is searched between, for example, the use area of the user and at least one condition of the advertisement area of the advertiser and the business type or state of the user.

When a match is found (step S313: Y), a message that the distribution order will be accepted is displayed and the entry of the type and number of the recording medium is demanded on the user terminal 3 (step S314). After the type and number of the recording medium are entered (step S315: Y), a context of distribution order is displayed on the user terminal 3 for confirmation, and the distribution order is accepted thereafter (step S316). If a match is not found (step S313: N), a message is displayed on the user terminal 3 that a suitable advertiser is absent at present time and a contact will be made when there is a matched application of a publication request and the entry of the type and number of the recording medium is demanded (step S317). After the entry is performed (step S318: Y), the application of the distribution order is recorded in the application table of distribution order 31 (step S319).

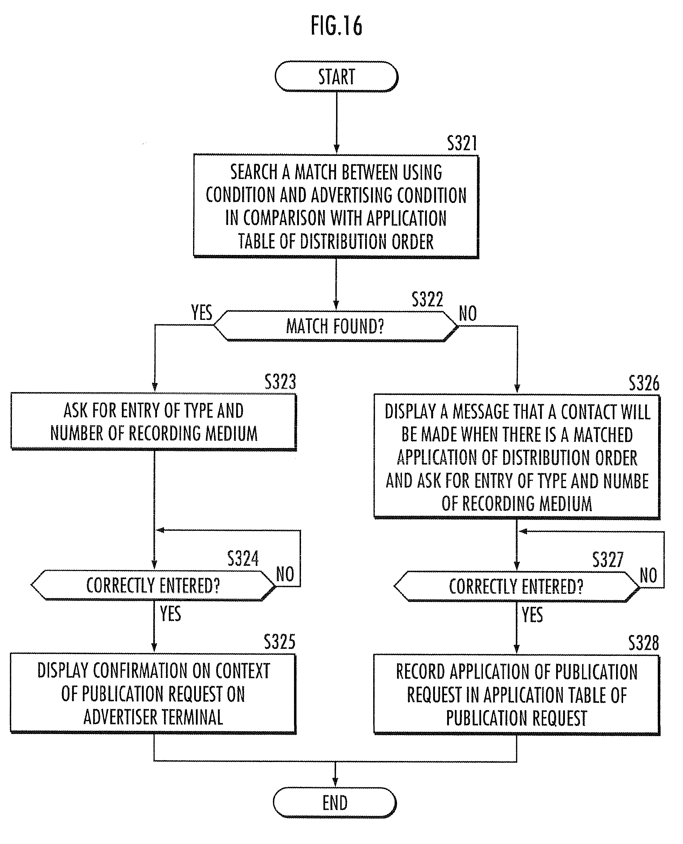

Fig. 16 is a flow chart illustrating in detail the publication request reception process (step S320). In the publication request reception process (step S320), firstly, a match between the advertisement condition entered in the advertisement condition entering process (step S230) and the use condition of the user is searched by referring to the application table of distribution order 31 (step S321). A match between, for example, the use area of the user and at least one of the advertisement area of the advertiser and the business type or state of the user is searched.

When a match is found (step S322: Y), a message that the publication request will be accepted is displayed and the entry of the type and number of the recording medium is demanded on the advertiser terminal 4 (step S323). After the type and number of the recording medium are entered (step S324: Y), a context of publication request is displayed on the advertiser terminal 4 for confirmation, and the publication request is accepted thereafter (step S325), the flow chart proceeds to, for example, the draft reception process (step S330) or the charging process (step S500). If a match is not found (step S322: N), a message is displayed on the advertiser terminal 4 that a suitable user is absent at present time and a contact will be made when there is a matched application of a distribution order and the entry of the type and number of the recording medium desired to be published is demanded (step S326). After the entry is performed (step S327: Y), the application of the publication request is recorded in the application table of publication request 32 (step S328).

In the draft reception process (step S330), options such as using a registered draft, requesting preparation of a draft, and using simple preparation function to prepare a draft with reference to a sample are displayed, for example, on the advertiser terminal 4 for the advertiser to choose and the draft of information to be published on the recording medium is performed according to the selected option. For example, when the option of using a registered draft is selected, the entry of the code of the registered draft or the like is demanded; in case of requesting preparation of a draft, the entry of the addressee is demanded; and in case of using simple preparation function, the process proceeds to the using of the simple preparation function.

In the order context displaying process (step S400), the context of the application of the distribution order is displayed on the advertiser terminal 4 with reference to the application table of distribution order 31 according to, for example, a request sent from the advertiser terminal 4 by an advertiser whose login has been authorized in the advertiser login process (step S220).

In the charging process (step S500), the advertisement fee is charged from the advertiser if the publication request has been accepted in the publication reception process (step S320) and record the advertisement fee in the billing table 51.

According to the embodiment mentioned above, with regard to the application of the distribution order and the application of the publication request, a match between the use condition of the user and the advertisement condition of the advertiser is searched by the reception element 30 and the distribution order and the publication request are accepted when the match is found. Therefore, the user can easily get a piece of information of high benefits by making the distribution order of the recording medium only. The advertiser can also offer the information adequate to the user widely in a simple way.

Particularly, by searching a match between the use area of the user and at least one of the advertisement area of the advertiser and the business type or state of the user by means of the reception element 30, useful information can be provided proficiently to a user related closely to the use area, or the business type or state.

The application of the distribution order is searched for a match between the use condition of the user and the advertisement condition of the advertiser by referring to the application table of publication request 32. The distribution order will be accepted if the match is present, and otherwise, the distribution order will be stored in the application table of distribution order 31. Moreover, the application of the publication request is searched for a match between the use condition of the user and the advertisement condition of the advertiser by referring to the application table of distribution order 31. The publication request will be accepted if the match is present, and otherwise, the publication request will be stored in the application table of publication request 32. According thereto, a match can be easily found, allowing the distribution order and the publication request to be accepted quickly.

By displaying the context of the application of the distribution order for the recording medium by means of the order context displaying element 40 according to the requirement from the advertiser, the advertiser can perform the provision of information on purpose more easily.

Additionally, by charging the advertiser for an advertisement fee by means of the charging element 50 after the publication request has been accepted, the advertiser can provide the information to the user proficiently. As a result, the user can get the information more easily, which promotes the provision of information by the advertiser.

Although the present invention has been described according to the preferred embodiments, it should be noted that the present invention is not limited to the above embodiments and other possible modifications and variations made without departing from the gist and scope of the invention will be comprised in the present invention. For example, it is not necessary for the recording medium distribution system of the present invention to include all the elements or functions described in the above-mentioned embodiment and it is also possible for it to include the other elements or functions. Additionally, the recording medium distribution method of the present invention may not include all the processes described in the above-mentioned embodiment, or it may include the other processes.

In the above-mentioned embodiment, at least one of the use area and the business type or state of the user is used as the use condition and at least one of the advertisement area of the advertiser and the business type or state of the user is used as the advertisement condition. However, it should be noted that the other use condition and advertisement condition different from those described in the above-mentioned embodiment may be used.

In the above-mentioned embodiment, the present invention is described in detail to have the distribution ordering element 10, the publication requesting element 20, the reception element 30, the order context displaying element 40 and the charging element 50. It should be noted that the present invention may include other elements as long as they can achieve the same functions, respectively.

### The industrial applicability

The present invention can be used to distribute a recording medium such as paper or the like by means of a computer network to a user who has a desire for the recording medium.

## Claims

1. A recording medium distribution system configured to distribute a recording medium by means of a computer network to a user who has a desire for the recording medium, comprising:
a distribution ordering element configured to accept an application of a distribution order from the user who has a desire for the recording medium;
a publication requesting element configured to accept an application of a publication request from an advertiser who has a desire to publish information on a back surface of the recording medium; and
a reception element configured to search the application of the distribution order accepted by the distribution ordering element and the application of the publication request accepted by the publication requesting element for a match between a use condition of the user and an advertisement condition of the advertiser, and to accept the distribution order and the publication request if the match is present.

2. The recording medium distribution system according to claim 1, wherein the use condition of the user includes at least one of a use area where the user uses the recording medium and a business type or state of the user; the advertisement condition of advertiser includes at least one of an advertisement area where the advertiser distributes the recording medium and the business type or state of the user; and the reception element searches the match between the use area of the user and at least one of the advertisement area of the advertiser and the business type or state of the user in the use condition and the advertisement condition.

3. The recording medium distribution system according to either one of claims 1 and 2, wherein the reception element includes
an application table of distribution order configured to store the application of the distribution order;
an application table of publication request configured to store the application of the publication request;
a distribution order reception element configured to search the application of the distribution order accepted by the distribution ordering element for a match between the use condition of the user and the advertisement condition of the advertiser by referring to the application table of publication request; to accept the distribution order if the match is present; and otherwise to store the distribution order in the application table of distribution order; and
a publication request reception element configured to search the application of the publication request accepted by the publication requesting element for a match between the use condition of the user and the advertisement condition of the advertiser by referring to the application table of publication request; to accept the publication request if the match is present; and otherwise store the publication request in the application table of publication request.

4. The recording medium distribution system according to either one of claims 1 and 3 further includes an order context displaying element configured to display a context of the application of the distribution order for the recording medium according to a requirement from the advertiser.

5. The recording medium distribution system according to either one of claims 1 and 4 further includes a charging element configured to charge the advertiser for an advertisement fee if the publication request has been accepted by the reception element.

6. A recording medium distribution method for distributing a recording medium by means of a computer network to a user who has a desire for the recording medium, comprising steps of:
accepting an application of a distribution order from the user who has a desire for the recording medium by means of a computer;
accepting an application of a publication request from an advertiser who has a desire to publish information on a back surface of the recording medium by means of a computer; and
searching the application of the distribution order accepted by the distribution ordering element and the application of the publication request accepted by the publication requesting element for a match between a use condition of the user and an advertisement condition of the advertiser, and accepting the distribution order and the publication request if the match is present by means of a computer.
